# EUROPÄISCHE PATENTSCHRIFT

(11) **EP 1 411 286 B1**
(45) Veröffentlichungstag und Bekanntmachung des Hinweises auf die Patenterteilung: **22.11.2006**
(21) Anmeldenummer: 02405886.9
(22) Anmeldetag: 16.10.2002
(51) Int. Cl.: F16L 3/133, F16L 3/12, F16L 3/237, F16L 3/24

(54) **Rohrschelle**
Pipe clamp
Collier de fixation de tuyau

(43) Veröffentlichungstag der Anmeldung: 21.04.2004
(73) Patentinhaber: GEBERIT TECHNIK AG, 8645 Jona (CH)
(72) Erfinder: Bauer, Thomas, 8640 Rapperswil (CH); Kipfer, Richard, 8706 Meilen (CH)
(74) Vertreter: Groner, Manfred

(56) Entgegenhaltungen:
- EP-A- 1 215 432
- WO-A-98/05895
- DE-C- 521 677
- US-A- 692 529
- US-A- 3 198 463
- US-A- 5 193 769

## Beschreibung

Die Erfindung betrifft eine Rohrschelle zum Befestigen einer Rohrleitung gemäss Oberbegriff des Anspruchs 1. Die Erfindung betrifft zudem ein Verfahren zur Montage einer Rohrleitung mit solchen Rohrschellen.

Rohrschellen zum Befestigung einer Rohrleitung an einer Decke sind in zahlreichen Ausführungen seit langem bekannt. Beispielsweise zeigt die EP 0 603 124 A1 eine Rohrschelle, die aus einem Metallband hergestellt ist. Die beiden Enden des Bandes sind an einer Gewindestange befestigt, welche diese beiden Enden durchgreift. Mit zwei Muttern sind diese beiden Enden festgeklemmt. Zur Aufnahme erhöhter Zugkräfte weisen diese Enden zusammenwirkende Rastmittel auf.

Die gattungsbildende WO 98/05895 A offenbart eine Rohrschelle zum Befestigen einer Rohrleitung an einer Gebäudedecke. Sie besitzt ein Band mit einem Haltebügel und einer Halteschlaufe, die an ihren freien Enden miteinander verbunden werden, indem sie auf einer in der Gebäudedecke verankerten Gewindestange zwischen zwei Muttern festgeklemmt werden.

Die US-A-3198463 offenbart eine gattungsgemässe Rohrschelle, die einen Haltebügel aufweist, der an einem Ende einen Abbug mit einer Öffnung besitzt, die zur Aufnahme einer Zunge besitzt, die zum Verbinden des Haltebügels verdreht wird. Zum Einlegen der Rohrleitung in den Haltebügel wird dieser entlang eines Schlitzes deformiert. Nach dem Einlegen der Rohrleitung in den Haltebügel wird dieser wieder in die ursprüngliche Form gebracht.

Die CH 684 114 A5 offenbart eine Rohrschelle, die einen U-förmigen Tragbügel und einen halbkreisförmigen Spannbügel aufweist. Der Spannbügel ist an seinem einen Ende mit einem Haken und am anderen Ende mit einer Befestigungsschraube am Tragbügel befestigt. Die Rohrschelle kann wahlweise für eine Fixpunktbefestigung oder eine Gleitpunktbefestigung verwendet werden.

Die EP 0 274 760 A1 offenbart eine Rohrschelle, die aus zwei Teilen besteht, die mit zwei Schrauben miteinander verbunden sind. Ein unterer Teil dient zur Aufnahme einer Montageschiene und ist mit einem Keil an dieser fixierbar.

Bei den genannten Rohrschellen besteht die Schwierigkeit, dass die Montage vergleichsweise umständlich und aufwändig ist, da vielfach an einem ungünstigen Ort gearbeitet werden muss und beide Hände für Manipulationen erforderlich sind. Insbesondere sind Schraubvorgänge meist umständlich und zeitaufwändig.

Der Erfindung liegt die Aufgabe zugrunde, eine Rohrschelle der genannten Art zu schaffen, welche eine einfachere und schnellere Montage ermöglicht. Die Rohrschelle soll trotzdem funktionssicher sein und eine stabile Befestigung von Rohrleitungen ermöglichen.

Die Erfindung ist bei einer gattungsgemässen Rohrschelle gemäss Anspruch 1 gelöst. Bei der erfindungsgemässen Rohrschelle kann die Rohrleitung in einem ersten Schritt provisorisch aufgehängt werden. Das Aufhängen erfolgt mit Rastmitteln, die ohne Schraubvorgänge ein Verbinden der beiden Enden der Rohrschelle ermöglichen. Bei der Montage kann mit einer Hand die Rohrleitung gehalten und mit der anderen Hand können die beiden Ende miteinander verrastet werden. Ist die Rohrleitung provisorisch aufgehängt, kann die Rohrschelle dann endgültig fixiert werden.

Nach einer Weiterbildung der Erfindung weist das Band umlegbare Laschen auf, die im umgelegten Zustand das andere Ende des Bandes oder eine Halteschiene untergreifen und damit die Rohrschelle verschliessen oder an der Halteschiene fixieren. Ein solches Umlegen von Laschen kann mit einer Hand in einfacher Weise er folgen. Zudem können solche Laschen in kostengünstiger Weise durch Stanzen hergestellt werden.

Das Band in einem unteren Bereich eine Schwächungsstelle auf, derart, dass die Halteschlaufe scharnierartig ein- und ausschwenkbar ist. Ist die Rohrschelle an der Gebäudedecke befestigt, so wird die Halteschlaufe ausgeschwenkt, sodass die Rohrleitung von oben in die Rohrschelle eingelegt und gegen Herausfallen gesichert ist. Durch Einschwenken und Befestigen der Halteschlaufe kann die Rohrleitung provisorisch fixiert werden. Die Schwächungsstelle wird gemäss einer Weiterbildung in einfacher Weise durch einen Durchbruch, beispielsweise eine Ausstanzung gebildet.

Die Erfindung betrifft zudem ein Verfahren zur Montage einer Rohrleitung mit einer genannten Rohrschelle. Für das Verfahren ist es wesentlich, dass die Rohrleitung in einem ersten Schritt provisorisch befestigt wird. In einem zweiten Schritt kann dann die Rohrschelle beispielsweise an einer Tragschiene fixiert werden. Die provisorische Befestigung erfolgt mit Rastmitteln. Da Schraubvorgänge nicht erforderlich sind, ist eine einfache Montage möglich. Vorzugsweise ist die Rohrschelle für eine Gleitpunktbefestigung vorgesehen.

Ein Ausführungsbeispiel der Erfindung wird nachfolgend anhand der Zeichnung näher erläutert. Es zeigen:
- Figur 1: schematisch das Einlegen einer Rohrleitung in eine erfindungsgemässe Rohrschelle,
- Figur 2: eine Ansicht einer Rohrschelle mit eingelegter Rohrleitung,
- Figur 3: eine weitere Ansicht der Rohrschelle mit eingelegter Rohrleitung und
- Figur 4: ein Schnitt entlang der Linie IV-IV der Figur 2.

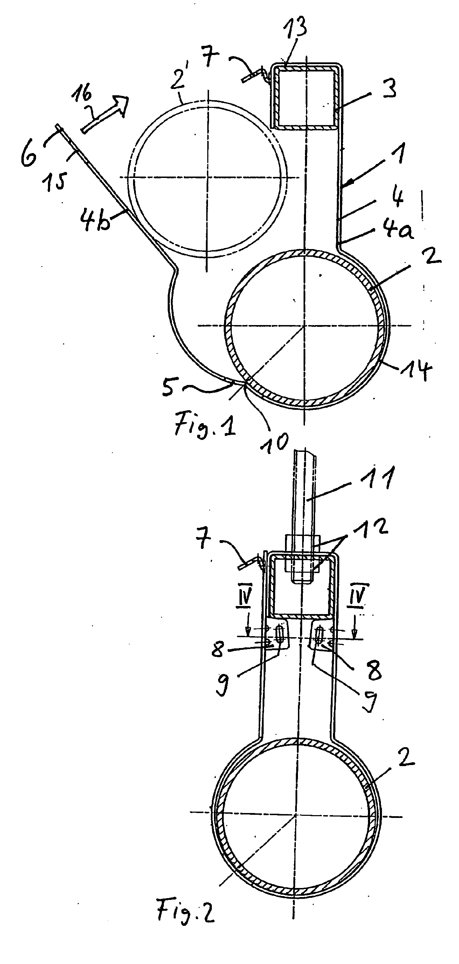

Die Rohrschelle 1 besteht aus einem Band 4, insbesondere einem Metallband, das zur Gleitpunktbefestigung einer Rohrleitung 2 dient. Die Rohrleitung 2 ist hier insbesondere eine Wasserleitung. Das Band 4 besitzt einen Haltebügel 4a, der mit einem U-förmigen Ende 13 um eine im Querschnitt viereckige Halteschiene 3 gelegt ist. Diese Halteschiene 3 ist beispielsweise mit einer Gewindestange 11 und zwei Gewindemuttern 12 an einer hier nicht gezeigten Gebäudedecke befestigt. Die Halteschiene 3 ist nicht zwingend. Die Rohrschelle 1 kann auch direkt mit der Gewindestange 11 einer Gebäudedecke befestigt werden. Im Abstand zum Ende 13 weist der Haltebügel 4a einen halbkreisförmigen Bereich 4 auf, in den die Rohrleitung 2 einzulegen ist, wie die Figur 1 erkennen lässt.

Das Band 4 weist zudem eine Halteschlaufe 4b auf, die ein freies Ende 6 besitzt, das einen viereckigen Durchbruch 15 aufweist, der ein Rastelement bildet und mit einer Rastzunge 7 am Ende 13 zusammenarbeitet. Die Rastzunge 7 und die Ausnehmung 15 bilden ein Rastmittel, mit dem die beiden Enden 6 und 13 lose miteinander verbindbar sind. Um die Verbindung herzustellen, wird die Halteschlaufe 4b in Figur 1 in Richtung des Pfeils 16 um eine Schwächungsstelle 10 verschwenkt. Durch Andrücken des Endes 6 am Ende 13 rastet die Rastzunge 7 im Durchbruch 15 ein. Das Verbinden ist damit sehr einfach und kann mit einer Hand erledigt werden.

Die Schwächungsstelle 10 ist durch einen Durchbruch 5 gebildet. Die Schwächungsstelle 10 kann aber auch auf andere Weise und grundsätzlich auch durch ein Scharnier gebildet werden.

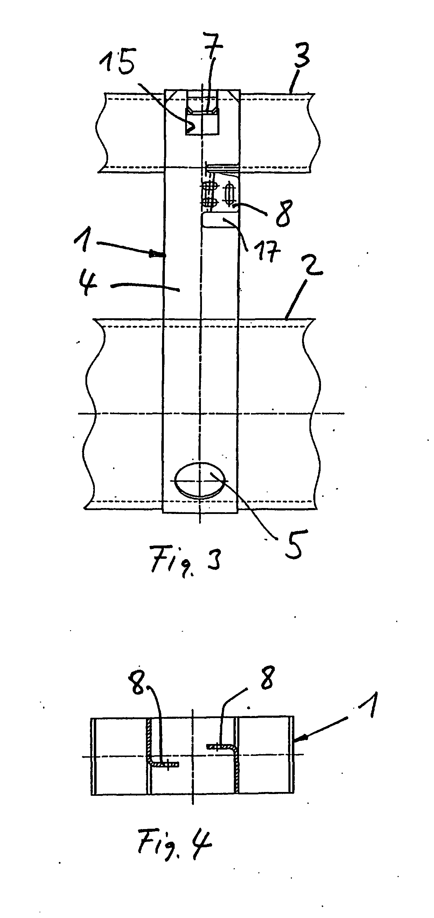

Zur Höhenfixierung der Rohrschelle 1 an der Montageschiene 3 weist das Band 4 zwei Laschen 8 auf, von denen die eine am Haltebügel 4a und die andere an der Halteschlaufe 4b angeordnet ist. Die Laschen 8 sind durch eine Stanzung 17 gebildet, wie die Figur 3 erkennen lässt. Jede Lasche 8 ist mit einem Langloch 9 versehen, in die ein Werkzeug einführbar ist, um die Lasche 8 in die in Figur 4 gezeigte Stellung umzubiegen. Die Laschen 8 können aber auch jeweils beispielsweise mit einer Zange umgebogen werden. Die Laschen 8 sind so positioniert, dass sie im ungebogenen Zustand gemäss Figur 2 die Halteschiene 3 untergreifen und an dieser anliegen. Die Laschen 8 werden um etwa 90° umgelegt, wobei sie wie in Figur 4 in symmetrischer Anordnung gegenüberliegen. Die Rohrschelle 1 ist bei umgebogenen Laschen 8 fixiert und kann in der Höhe nicht mehr verstellt werden. Durch die Fixierung der Halteschlaufe 4b kann diese nicht mehr aus der Rastzunge 7 herausgehoben werden. Die lose Rastverbindung zwischen der Rastzunge 7 und dem Durchbruch 15 wird damit eine feste Verbindung. Bei einer Anordnung ohne Halteschiene 3 untergreifen die Laschen 8 das Ende des Haltebügels 4a und bilden einen Verschluss.

Die Rohrschelle 1 wird bevorzugt ausschliesslich durch das Band 4 gebildet. Die Rastzunge 7, die Durchbrüche 10 und 15 sowie die Laschen 8 können kostengünstig durch Stanzen hergestellt werden. Zusätzliche Einzelteile wie Schrauben und Muttern können vermieden werden. Entsprechend sind auch Schraubvorgänge und spezielle Werkzeuge nicht erforderlich.

Der Montagevorgang wird nachfolgend näher erläutert.

Nach der Montage der Halteschiene 3 wird die erforderliche Anzahl Rohrschellen 1 in vorgesehenem Abstand bei offener Halteschlaufe 4b auf die Halteschiene 3 aufgelegt, wie dies in Figur 1 gezeigt ist. Die Halteschlaufen 4 der Rohrschellen 1 sind alle auf die gleiche Seite offen. Die Rohrleitung 2 wird nun von oben in die offenen Rohrschellen 1 eingelegt. In der Figur 1 ist eine erste Stellung einer Rohrleitung 2' mit strichpunktierten Linien gezeigt. In den Rohrschellen 1 wird die Rohrleitung 2' nach unten geschoben, bis sie in den halbkreisförmigen Bereich 14 eingelegt ist. Nun werden die Rohrschellen 1 geschlossen, indem die Halteschlaufen 4b jeweils in Richtung des Pfeils 16 verschwenkt und jeweils an einer Rastzunge 7 vorläufig lose verbunden sind. Sind alle Rohrschellen 1 geschlossen, so werden die Laschen 8 umgelegt. Die Rohrschellen 1 sind damit an der Montageschiene 3 fixiert und können in der Höhe nicht mehr verschoben werden. Die Rohrschellen 1 bilden vorzugsweise Gleitpunktbefestigungen, d.h. die Rohrleitung 2 ist in den Rohrschellen 1 in Längsrichtung nicht festgelegt und kann sich relativ zu diesen Rohrschellen 1 beispielsweise aufgrund Wärmedehnungen verschieben. Grundsätzlich kann die Rohrschelle 1 jedoch auch für eine Fixpunktbefestigung ausgebildet werden und auch einzeln ohne Halteschiene 3 befestigt werden.

## Patentansprüche

1. Rohrschelle zum Befestigen einer Rohrleitung (2) an einer Gebäudedecke, mit einem Band (4), das ein erstes (13) und ein zweites (6) Ende aufweist und einen mit der Gebäudedecke zu verbindenden Haltebügel (4a) sowie eine Halteschlaufe (4b) zur Fixierung der Rohrleitung (2) bildet, mit Mitteln (7, 15) zum Verbinden der beiden genannten Enden (13, 6) des Bandes (4), wobei das Band (4) zum Einlegen der Rohrleitung (2) aufweitbar ist und in einem unteren Bereich eine zwischen dem Haltebügel (4a) und der Halteschlaufe (4b) angeordnete Schwächungsstelle (10) aufweist, derart, dass die Halteschlaufe (4b) scharnierartig ein- und ausschwenkbar ist, **dadurch gekennzeichnet, dass** die Mittel (7, 15) zum Verbinden der beiden Enden (13, 6) so ausgebildet sind, dass sie bei eingelegter Rohrleitung (2) mit Rastelementen (7, 15) lose miteinander verbindbar sind und dass die Rastelemente (7, 15) durch eine Rastzunge (7) am ersten Ende und einen Durchbruch (15) am zweiten Ende (6) des Bandes (4) gebildet sind.

2. Rohrschelle nach Anspruch 1, **dadurch gekennzeichnet, dass** die Rastelemente (7, 15) Teile des Bandes (4) sind.

3. Rohrschelle nach Anspruch 1 oder 2, **dadurch gekennzeichnet, dass** die Mittel (7, 15) zum Verbinden der beiden Enden (13, 6) im oberen Bereich der Rohrschelle (1) angeordnet sind.

4. Rohrschelle nach einem der Ansprüche 1 bis 3, **dadurch gekennzeichnet, dass** das Band (4) wenigstens eine umbiegbare Lasche (8) aufweist, die im umgelegten Zustand das erste Ende (13) untergreift und damit die Rohrschelle (1) verschliesst.

5. Rohrschelle nach einem der Ansprüche 1 bis 4, **dadurch gekennzeichnet, dass** die beiden Enden (13, 6) des Bandes (4) so ausgebildet sind, dass sie an bzw. um eine Halteschiene (3) legbar sind und dass das Band (4) wenigstens eine umbiegbare Lasche (8) aufweist, die im umgelegten Zustand die Halteschiene (3) untergreift und damit die Rohrschelle (1) höhenfixiert.

6. Rohrschelle nach Anspruch 4 oder 5, **dadurch gekennzeichnet, dass** der Haltebügel (4a) als auch die Halteschlaufe (4b) jeweils eine umbiegbare Lasche (8) aufweisen.

7. Rohrschelle nach Anspruch 1, **dadurch gekennzeichnet, dass** die Schwächungsstelle (10) durch einen Durchbruch (5) im Band (4) gebildet ist.

8. Rohrschelle nach einem der Ansprüche 1 bis 7, **dadurch gekennzeichnet, dass** sie ausschliesslich aus dem Band (4) hergestellt ist.

9. Verfahren zur Montage einer Rohrleitung (2) mit mehreren Rohrschellen (1) gemäss Anspruch 1, wobei Rohrschellen (1) im Abstand zueinander an einer Gebäudedecke befestigt werden, **dadurch gekennzeichnet, dass** die Halteschlaufen (4b) scharnierartig ausgeschwenkt wird, dass die Rohrleitung (2) von oben in die Rohrschellen (1) eingelegt und die Halteschlaufen (4b) eingeschwenkt und anschliessend die Enden (13, 6) der Rohrschellen (1) mit der Rastzunge (7) und dem Durchbruch (15) lose vorverbunden werden.

10. Verfahren nach Anspruch 19, **dadurch gekennzeichnet, dass** der Haltebügel (4a) und die Halteschlaufe (4b) durch Umbiegen von Laschen (8) an einer Montageschiene (3) höhenfixiert werden.

11. Verfahren nach Anspruch 9 oder 10, **dadurch gekennzeichnet, dass** die Rohrschellen (1) zum Einlegen der Rohrleitung (2) jeweils um eine Schwächungsstelle (10) aufgebogen und anschliessend um diese Schwächungsstelle (10) wieder geschlossen werden.

## Claims

1. Pipe clip for securing a pipe (2) on a building ceiling, comprising a strip (4) with a first (13) and a second (6) end and forming a retaining bracket (4a) to be connected to the building ceiling, as well as a retaining arm (4b) for fixing the pipe (2), having means (7, 15) for connecting said two ends (13, 6) of the strip (4), which strip (4) can be opened up in order to insert the pipe (2) and has a weak point (10) disposed in a bottom region between the retaining bracket (4a) and the retaining arm (4b) so that the retaining arm (4b) can be pivoted inwards and outwards in the manner of a hinge, **characterised in that** the means (7, 15) for connecting the two ends (13, 6) are designed so that they are loosely connected to one another by means of catch elements (7, 15) when the pipe (2) is inserted and the catch elements (7, 15) are formed by means of a catch lug (7) on the first end and an orifice (15) at the second end (6) of the strip (4).

2. Pipe clip as claimed in claim 1, **characterised in that** the catch elements (7, 15) are parts of the strip (4).

3. Pipe clip as claimed in claim 1 or 2, **characterised in that** the means (7, 15) for connecting the two ends (13, 6) are disposed in the top region of the pipe clip (1).

4. Pipe clip as claimed in one of claims 1 to 3, **characterised in that** the strip (4) has at least one tab (8) which can be bent round and locates underneath the first end (13) in the bent-round state, thereby closing the pipe clip (1).

5. Pipe clip as claimed in one of claims 1 to 4, **characterised in that** the two ends (13, 6) of the strip (4) are designed so that they can be fitted on or round a mounting rail (3) and the strip (4) has at least one tab (8) which can be bent round which locates underneath the mounting rail (3) in the bent-round state and thus fixes the vertical position of the pipe clip (1).

6. Pipe clip as claimed in claim 4 or 5, **characterised in that** the retaining bracket (4a) and the retaining arm (4b) each have a tab (8) which can be bent round.

7. Pipe clip as claimed in claim 1, **characterised in that** the weak point (10) is provided in the form of an orifice (5) in the strip (4).

8. Pipe clip as claimed in one of claims 1 to 7, **characterised in that** it is produced exclusively from the strip (4).

9. Method of fitting a pipe (2) using several pipe clips (1) as claimed in claim 1, whereby pipe clips (1) are secured on a building ceiling at a distance from one another, **characterised in that** the retaining arms (4b) are pivoted out in the manner of a hinge, the pipe (2) is inserted in the pipe clips (1) from above and the retaining arms (4b) are pivoted in, after which the ends (13, 6) of the pipe clips (1) are loosely pre-connected by means of the catch lug (7) and the orifice (15).

10. Method as claimed in claim 9, **characterised in that** the retaining bracket (4a) and the retaining arm (4b) are fixed in the vertical position by bending tabs (8) round onto a mounting rail (3).

11. Method as claimed in claim 9 or 10, **characterised in that**, in order to insert the pipe (2), the pipe clips (1) are respectively bent open about a weak point (10) and then closed again about this weak point (10).

## Revendications

1. Collier de serrage pour fixer une canalisation (2) sur un plafond d'un bâtiment, avec une bande (4), comportant une première (13) et une deuxième (6) extrémité et qui forme un étrier de retenue (4a) à relier avec le plafond du bâtiment, ainsi qu'une courroie de maintien (4b) pour la fixation de la canalisation (2), avec des moyens (7, 15) pour relier les deux extrémités (13, 6) de la bande (4), la bande (4) pouvant s'élargir pour insérer la canalisation (2) et comportant dans une zone inférieure une zone d'affaiblissement (10) disposée entre l'étrier de retenue (4a) et la courroie de maintien (4b), de façon telle que la courroie de maintien (4b) puisse pivoter de part et d'autre, à la manière d'une charnière, **caractérisé en ce que** les moyens (7, 15) pour relier les deux extrémités (13, 6) sont conçus de façon telle, que lorsque la canalisation (2) est insérée, on puisse les relier les uns avec les autres de façon amovible par des éléments d'enclenchement (7, 15) et **en ce que** les éléments d'enclenchement (7, 15) sont formés par une languette d'enclenchement (7) sur la première extrémité et par un jour (15) sur la deuxième extrémité (6) de la bande (4).

2. Collier de serrage selon la revendication 1, **caractérisé en ce que** les éléments d'enclenchement (7, 15) sont des parties de la bande (4).

3. Collier de serrage selon la revendication 1 ou 2, **caractérisé en ce que** les moyens (7, 15) pour relier les deux extrémités (13, 6) sont disposés dans la zone supérieure du collier de serrage (1).

4. Collier de serrage selon l'une quelconque des revendications 1 à 3, **caractérisé en ce que** la bande (4) comporte au moins une patte repliable (8) qui à l'état replié s'accroche par le dessous sous la première extrémité (13) et ferme ainsi le collier de serrage (1).

5. Collier de serrage selon l'une quelconque des revendications 1 à 4, **caractérisé en ce que** les deux extrémités (13, 6) de la bande (4) sont conçues de façon à pouvoir s'appliquer sur ou autour d'un rail de maintien (3) et **en ce que** la bande (4) comporte au moins une patte repliable (8) qui à l'état replié s'accroche par le dessous sous le rail de maintien (3) et fixe ainsi le collier de serrage (1) en hauteur.

6. Collier de serrage selon la revendication 4 ou 5, **caractérisé en ce que** l'étrier de retenue (4a) tout comme la courroie de maintien (4b) comportent chacun une patte repliable (8).

7. Collier de serrage selon la revendication 1, **caractérisé en ce que** la zone d'affaiblissement (10) est formée par un jour (5) dans la bande (4).

8. Collier de serrage selon l'une quelconque des revendications 1 à 7, **caractérisé en ce qu'**il est uniquement fabriqué dans la bande (4).

9. Procédé de montage d'une canalisation (2) avec plusieurs colliers de serrage (1) selon la revendication 1, pour lequel on fixe des colliers de serrage (1) espacés les uns des autres au plafond d'un bâtiment, **caractérisé en ce qu'**on fait pivoter la courroie de maintien (4b) vers l'extérieur à la manière d'une charnière, **en ce qu'**on insère la canalisation (2) par le dessus dans les colliers de serrage (1) et **en ce qu'**on fait pivoter la courroie de maintien (4b) vers l'intérieur puis **en ce qu'**on pré-relie de façon amovible les extrémités (13, 6) des colliers de serrage (1) avec la languette d'enclenchement (7) et le jour (15).

10. Procédé selon la revendication 9, **caractérisé en ce qu'**on fixe en hauteur l'étrier de retenue (4a) et la courroie de maintien (4b) en repliant des languettes (8) sur un rail de montage (3).

11. Procédé selon la revendication 9 ou 10, **caractérisé en ce qu'**on ouvre les colliers de serrage (1) pour insérer la canalisation (2) respectivement autour d'une zone d'affaiblissement (10) et **en ce qu'**on les referme ensuite autour de ladite zone d'affaiblissement (10).
